# EUROPEAN PATENT SPECIFICATION

(11) **EP 3 185 515 B1**
(45) Date of publication and mention of the grant of the patent: **06.05.2020**
(21) Application number: 16206391.1
(22) Date of filing: 22.12.2016
(51) Int. Cl.: H04L 29/08

(54) **METHOD AND DEVICE FOR INPUTTING INFORMATION**
METHODE UND GERÄT ZUR EINGABE VON INFORMATIONEN
MÉTHODE ET DISPOSITIF D'ENTRÉE D'INFORMATIONS

(30) Priority: 24.12.2015 CN 201510992593
(43) Date of publication of application: 28.06.2017
(73) Proprietor: Xiaomi Inc., Beijing 100085 (CN)
(72) Inventor: WANG, Xi, Beijing, 100085 (CN); FAN, Dian, Beijing, 100085 (CN); LIU, Daokuan, Beijing, 100085 (CN); LV, Zengxiang, Beijing, 100085 (CN); LI, Xiaoyin, Beijing, 100085 (CN)
(74) Representative: Hughes, Andrea Michelle

(56) References cited:
- EP-A2- 2 386 975
- WO-A1-2014/134963
- US-A1- 2003 229 666
- US-A1- 2013 219 323
- US-A1- 2014 062 679
- US-B1- 7 577 910

## Description

### TECHNICAL FIELD

The present disclosure generally relates to computer application technologies, and more particularly, to a method and device for inputting information.

### BACKGROUND

With continuous development of mobile communications and electronic technologies, portable mobile terminals have become one of the indispensable tools in people's daily life. During the usage of mobile terminals, people usually need to use the mobile terminals to input some information.

Conventionally, if a user wants to enter information in a mobile terminal, he/she may tap at a position on the screen of the mobile terminal where he/she wants to enter information. At this time, the mobile terminal enters a state for accepting input, and meanwhile displays an input interface including a virtual keyboard, by which the user can input information. Due to the small size of the screen of the mobile terminal, the size of the virtual keyboard is extremely limited, thereby resulting in low efficiency in user's input. Apparatus and methods for inputting information are known from US 2003/229666, EP 2386975 and WO 2014/134963 A1.

### SUMMARY

Embodiments of the present disclosure provide a method and device for inputting information. The invention is defined in the independent claims 1, 3 and 5.

The technical solutions provided by embodiments of the present disclosure can have the following advantageous effects:
In the technical solutions of the present disclosure, a network connection between a main input terminal and a relay device is established; the main input terminal obtains information to be input from the relay device, and the information to be input is input into an auxiliary input terminal and is sent from the auxiliary input terminal to the relay device; the information to be input is added to an input location in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input location in the main input terminal. Thus, input difficulties in the main input terminal are lowered, and thereby efficiency in information input can be raised.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an implementation environment involved in a method for inputting information according to an exemplary embodiment.
Fig. 2 is a flow chart of a method for inputting information according to an exemplary embodiment.
Fig. 3 is a flow chart of a method for inputting information according to another exemplary embodiment.
Fig. 4 is a flow chart of a method for inputting information according to another exemplary embodiment.
Fig. 5 is a block diagram of a device for inputting information according to an exemplary embodiment.
Fig. 6 is a block diagram of a device for inputting information according to another exemplary embodiment.
Fig. 7 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

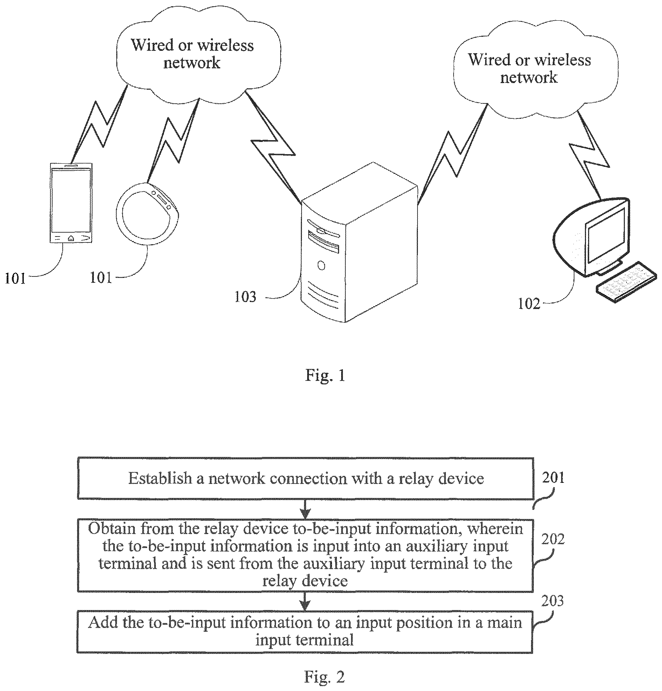

Fig. 1 is a schematic diagram showing an implementation environment involved in a method for inputting information of the present disclosure. The implementation environment can include a main input terminal 101, an auxiliary input terminal 102, and a relay device 103.

The main input terminal 101 can be an electronic device such as a mobile phone, a wearable device, a smart TV or a vehicle-mounted terminal. In one possible implementation, one or more application programs having an information inputting function (for example, application programs for inputting characters) can be installed in the main input terminal 101.

The auxiliary input terminal 102 can be a device such as a personal computer (PC), a laptop or a tablet.

The main input terminal 101 is connected with the relay device 103 via a wireless network, and the auxiliary input terminal 102 is connected with the relay device 103 via a wireless network.

The relay device 103 can be a server, or a host computer in a local area network, or a server cluster made up of a plurality of servers.

The technical solutions provided by embodiments of the present disclosure will be described and explained with the implementation environment as shown in Fig. 1 as an example.

Fig. 2 is a flow chart of a method for inputting information according to an exemplary embodiment. The method can be applied in the main input terminal 101 of the implementation environment described in connection with Fig. 1. The method for inputting information can include the following steps.

In step 201, a network connection with a relay device is established.

In step 202, information to be input is obtained from the relay device. The information to be input is input into an auxiliary input terminal and is sent from the auxiliary input terminal to the relay device.

In step 203, the information to be input is added to an input location in a main input terminal.

In view of the above, in the method for inputting information provided by the embodiment of the present disclosure, a network connection between a main input terminal and a relay device is established; the main input terminal obtains information to be input from the relay device, and the information to be input is input into an auxiliary input terminal and is sent from the auxiliary input terminal to the relay device; the information to be input is added to an input location in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input position in the main input terminal. Thus, input difficulties in the main input terminal are lowered, and thereby efficiency in information input can be raised.

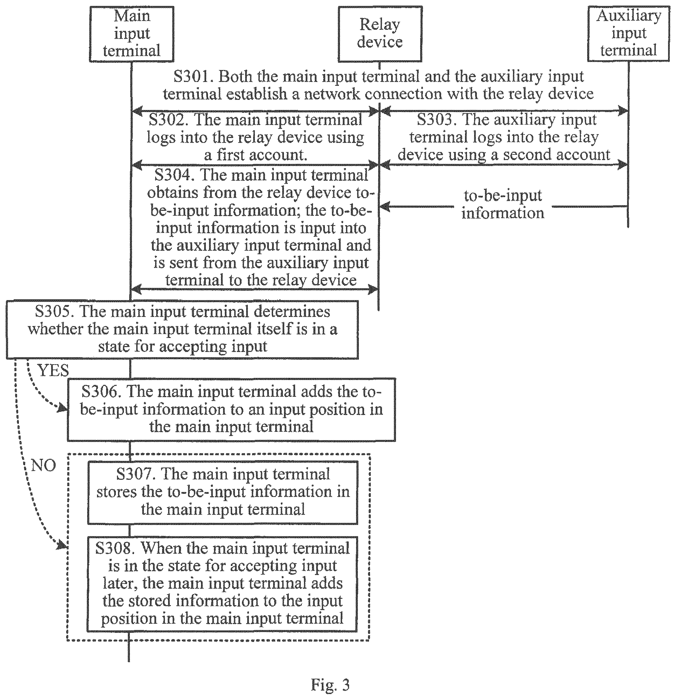

Fig. 3 is a flow chart of a method for inputting information according to another exemplary embodiment. The method can be applied in the implementation environment described in connection with Fig. 1. Referring to Fig. 3, the method can include the following steps.

In step 301, both the main input terminal and the auxiliary input terminal establish a network connection with the relay device.

The main input terminal and the auxiliary input terminal can establish a wireless or wired network connection with the relay device, respectively.

In step 302, the main input terminal logs into the relay device using a first account.

In step 303, the auxiliary input terminal logs into the relay device using a second account.

The first account and the second account can be the same one, or the first account and the second account are bound or associated with each other in advance. According to an exemplary embodiment, the first account and the second account can be a user name or an email address, or the like.

For example, in the main input terminal and the auxiliary input terminal, a user can download and install particular applications (APPs) corresponding to the main input terminal and the auxiliary input terminal in advance.

In a usage scenario, a user opens particular APPs in the main input terminal and the auxiliary input terminal respectively, and logs into the relay device using the same account; if the relay device detects that the main input terminal and the auxiliary input terminal log into the relay device using the same account, the relay device establishes a corresponding relationship between the main input terminal and the auxiliary input device.

Alternatively, in another usage scenario, a user logs into the relay device by the main input terminal or the auxiliary input terminal, and requests to bind or associate the two different accounts. Later, the user opens particular APPs in the main input terminal and the auxiliary input terminal, and logs into the relay device using an account Adam1 and an account Adam2. If the relay device determines that Adam1 and Adam2 are two accounts which are bound or associated with each other, the relay device establishes a corresponding relationship between the main input terminal and the auxiliary input terminal.

In step 304, the main input terminal obtains from the relay device information to be input. The information is input into an auxiliary input terminal and is sent from the auxiliary input terminal to the relay device.

In a state where both the main input terminal and the auxiliary input terminal log into the relay device, information input into the auxiliary input terminal by the user can be obtained by the main input terminal. When the main input terminal obtains the information to be input from the relay device, the main input terminal can obtain the information character by character. For example, for every character input by the user into the auxiliary input terminal, the auxiliary input terminal sends the character to the relay device in real time, and the main input terminal can obtain the character immediately. Correspondingly, to delete characters which have been input, for every character which is deleted by the user in the auxiliary input terminal, the auxiliary input terminal sends related deletion information to the relay device; after obtaining the deletion information from the relay device, the main input terminal deletes the obtained character. The deletion information can be instruction information for indicating the character to be deleted, and the main input terminal device can delete the character to be deleted among the obtained characters according to the deletion information. Or, the deletion information can directly include the remaining characters after deletion of one character, and the main input terminal can replace the obtained characters with the remaining characters after deletion of one character as indicated by the deletion information.

Or, when the main input terminal obtains the information to be input from the relay device, the main input terminal can obtain the information sentence by sentence. For example, after the user inputs a string of characters into the auxiliary input terminal, he/she can tap or click a particular button (for example, a save button). After the auxiliary input terminal sends the string of characters to the relay device, the main input terminal can obtain the whole string of characters all at once.

In step 305, the main input terminal determines whether the main input terminal itself is in a state for accepting input; if the main input terminal is in the state for accepting input, step 306 is performed; if the main input terminal is not in the state for accepting input, steps 307 and 308 are performed.

In step 306, the main input terminal adds the information to be input to an input location in the main input terminal.

The input location refers to a position in the main input terminal where information can be added. For example, the input location can be a position in the main input terminal where cursor flickers, or an input box in the main input terminal which is in an active state.

In step 307, the main input terminal stores the information to be input in the main input terminal.

In step 308, when the main input terminal is in the state for accepting input later, the main input terminal adds the stored information to the input position in the main input terminal.

According to an exemplary embodiment, if the main input terminal is not in the state for accepting input when the main input terminal obtains the information to be input from the relay device, the main input terminal can cache the information to be input; when the main input terminal enters the state for accepting input later, the main input terminal can add the cached information to the corresponding input location.

For example, the main input terminal is a smart phone, the auxiliary input terminal is a personal computer and the relay device is a server. The user installs a certain APP of a corresponding version into the smart phone and the personal computer. The APP can be an APP corresponding to the server. The user finishes login using a login page of the APP in the smart phone and the personal computer with the same account. At this time, the server can detect that the login accounts corresponding to the smart phone and the personal computer are the same, and the server establishes a corresponding relationship between the smart phone and the personal computer. After the user finishes the login using the APP in the personal computer, the interface of the APP can show an input box, into which the user can input information.

Every time after the user inputs one character, the personal computer sends the character to the server; after obtaining the character, the smart phone can add the obtained character to the input position if the smart phone is in the state for accepting input, and can cache the received character if the smart phone is not in the state for accepting input; when the smart phone enters the state for accepting input later, the smart phone can add the cached characters to the input position all at once. If the user deletes one character, the personal computer sends corresponding deletion information to the server; after obtaining the deletion information from the server, the smart phone deletes the character at the input position or in the cache as indicated by the deletion information.

Or, every time after the user input a string of characters into the personal computer and taps or clicks a save button, the personal computer sends the whole string of characters to the server; after obtaining the whole string of characters from the server, the smart phone adds the whole string of characters to the input location or caches the whole string of characters. If the user modifies the saved whole string of characters (for example, addition or deletion of one of more characters), the personal computer sends the modified whole string of characters to the server after the user taps or clicks the save button again; after obtaining the modified whole string of characters, the smart phone replaces the characters at the input location or in the cache with the modified whole string of characters.

In view of the above, in the method for inputting information provided by embodiments of the present disclosure, a network connection between a main input terminal and a relay device is established; the main input terminal obtains information to be input from the relay device, and the information is input into an auxiliary input terminal and is sent from the auxiliary input terminal to the relay device; the information to be input is added to an input location in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input position in the main input terminal. Thus, input difficulties in the main input terminal are lowered, and thereby efficiency in information input can be raised.

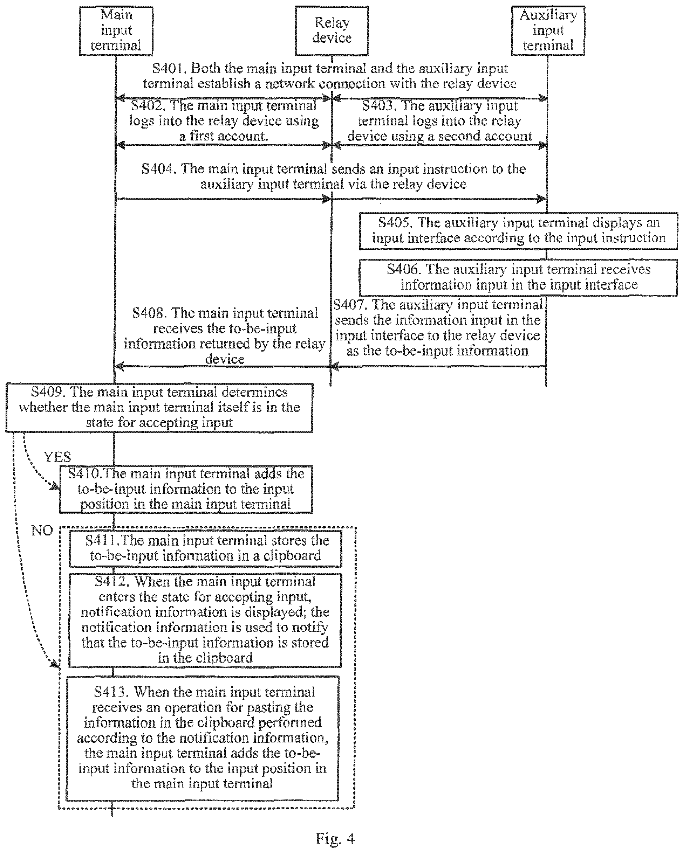

Fig. 4 is a flow chart of a method for inputting information according to another exemplary embodiment. The method can be applied in the implementation environment described in connection with Fig. 1. Referring to Fig. 4, the method can include the following steps.

In step 401, both the main input terminal and the auxiliary input terminal establish a network connection with the relay device.

In step 402, the main input terminal logs into the relay device using a first account.

In step 403, the auxiliary input terminal logs into the relay device using a second account. The first account and the second account can be the same, or the first account and the second account are bound or associated with each other.

Details about the login procedure in the main input terminal and the auxiliary input terminal can be found in the above descriptions regarding steps 301 to 303 in the embodiment described in connection with Fig. 3, and repeated descriptions are omitted here.

In step 404, the main input terminal sends an input instruction to the auxiliary input terminal via the relay device.

Correspondingly, the auxiliary input terminal can receive the input instruction sent from the main input terminal via the relay device. When the main input terminal enters the state for accepting input, the main input terminal can send the input instruction to the auxiliary input terminal. For example, when the user taps or clicks the input location such as an input box, the operating system in the main input terminal can receive an input focus request, and then the operating system controls the main input terminal to enter the state for accepting input. Meanwhile, the main input terminal sends the input instruction to the auxiliary input terminal via the relay device.

In step 405, the auxiliary input terminal displays an input interface according to the input instruction.

The input interface can be an interface displayed in a particular APP installed in the auxiliary input terminal, and input can be performed via the interface. For example, the input interface can be an input box displayed in an interface of the particular APP.

In step 406, the auxiliary input terminal receives information input in the input interface.

In step 407, the auxiliary input terminal sends the information input in the input interface to the relay device as the information to be input.

In step 408, the main input terminal receives the information to be input returned by the relay device.

The procedure for the main input terminal to receive the information to be input from the auxiliary input terminal in steps 406 to 408 can be found from the descriptions regarding step 304 in the embodiment described in connection with Fig. 3 and repeated descriptions are omitted here.

In step 409, the main input terminal determines whether the main input terminal itself is in the state for accepting input; if the main input terminal is in the state for accepting input, step 410 is performed; if the main input terminal is not in the state for accepting input, steps 411 to 413 are performed.

In step 410, the main input terminal adds the information to be input to the input position in the main input terminal.

In step 411, the main input terminal stores the information in a clipboard.

The present disclosure does not impose specific limitations on the capacity and number of pieces of information in the clipboard. The clipboard can store the most recently received piece of information to be input, or the clipboard can store multiple pieces of information to be input.

According to an exemplary embodiment, in the technical solutions of the present disclosure, the number of obtained pieces of information to be input which can be stored in the clipboard in the main input terminal can be set depending on actual application needs. For example, it can be defined that the clipboard in the main input terminal can cache ten pieces of obtained information at the most. It should be noted that the exemplary embodiment in the step is only for explaining one of the scenarios that the step can realize, but not for limiting the scope of the step.

In step 412, when the main input terminal enters the state for accepting input, notification information is displayed. The notification information is used to notify that the information to be input is stored in the clipboard.

The notification information can be displayed using a drop-down box. For example, the main input terminal can display a drop-down box which can include the information to be input stored in the clipboard in step 411. For example, the clipboard stores three pieces of information to be input, i.e., M1, M2 and M3, and the drop-down box can display the contents of the three pieces of information M1, M2 and M3. The drop-down box can display all of the contents of each piece of information to be input stored in the clipboard; or, if some pieces of information contain too many contents, only a part of the contents of the pieces of information to be input can be displayed, for example, only the first ten characters can be displayed. In addition to this, the notification information can be displayed in other ways, for example, the notification information can be displayed using a window, and embodiments of the present disclosure do not impose specific limitations on this.

Further, it can be defined according to usage needs that the information to be input stored in the clipboard can be deleted after it has been used once. If it is desired to maintain the information, the information can be locked. The locked information can be used any number of times. Afterwards, if the locked information is not needed any more, the locked information can be deleted.

In step 413, when the main input terminal receives an operation for pasting the information from the clipboard performed according to the notification information, the main input terminal adds the information to be input to the input location in the main input terminal.

In view of the above, in the method for inputting information provided by the embodiment of the present disclosure, a network connection between a main input terminal and a relay device is established; the main input terminal obtains information to be input from the relay device, and the information is input into an auxiliary input terminal and is sent from the auxiliary input terminal to the relay device; the information is added to an input location in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input position in the main input terminal. Thus, input difficulties in the main input terminal are lowered, and thereby efficiency in information input can be raised.

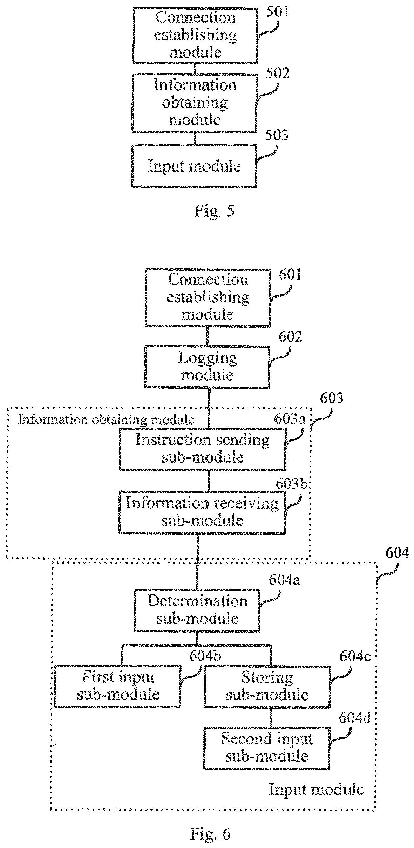

Fig. 5 is a block diagram of a device for inputting information according to an exemplary embodiment. The device for inputting information can be realized as the main input terminal in the implementation environment described in connection with Fig. 1 by hardware, software of a combination thereof so as to perform all or a part of the steps performed by the main input terminal in any one of the embodiments as shown in Figs. 2 to 4. Referring to Fig. 5, the device can include a connection establishing module 501, an information obtaining module 502, and an input module 503.

The connection establishing module 501 is configured to establish a network connection with a relay device.

The information obtaining module 502 is configured to obtain from the relay device information to be input. The information is input into an auxiliary input terminal and is sent from the auxiliary input terminal to the relay device.

The input module 503 is configured to add the information to be input obtained from the information obtaining module 502 to an input position in a main input terminal.

In view of the above, in the device for inputting information provided by the embodiment of the present disclosure, a network connection between a main input terminal and a relay device is established; the main input terminal obtains information to be input from the relay device, and the information is input into an auxiliary input terminal and is sent from the auxiliary input terminal to the relay device; the information to be input is added to an input position in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input position in the main input terminal. Thus, input difficulties in the main input terminal are lowered, and thereby efficiency in information input can be raised.

Fig. 6 is a block diagram of a device for inputting information according to another exemplary embodiment. The device for inputting information can be realized as the main input terminal in the implementation environment described in connection with Fig. 1 by hardware, software of a combination thereof so as to perform all or a part of the steps performed by the main input terminal in any one of the embodiments as shown in Figs. 2 to 4. Referring to Fig. 6, the device can include a connection establishing module 601, a logging module 602, an information obtaining module 603, and an input module 604.

The connection establishing module 601 is configured to establish a network connection with a relay device.

The logging module 602 is configured to, before the information obtaining module obtains the information to be input from the relay device, log into the relay device using a first account. The first account is the same as or associated with a second account, and the second account is an account for the auxiliary input terminal to log into the relay device.

The information obtaining module 603 is configured to obtain from the relay device information to be input. The information is input into an auxiliary input terminal and is sent from the auxiliary input terminal to the relay device.

The information obtaining module 603 includes an instruction sending sub-module 603a and an information receiving sub-module 603b.

The instruction sending sub-module 603a is configured to send an input instruction to the auxiliary input terminal via the relay device. The input instruction is configured to instruct the auxiliary input terminal to display an input interface to accept the information input in the input interface, and to send the information to the relay device.

The information receiving sub-module 603b is configured to receive the information to be input returned by the relay device.

The input module 604 is configured to add the information to be input obtained from the information obtaining module to an input location in a main input terminal.

The input module 604 includes a determination sub-module 604a, a first input sub-module 604b, a storing sub-module 604c and a second input sub-module 604d.

The determination sub-module 604a is configured to determine whether the main input terminal is in a state for accepting input.

The first input sub-module 604b is configured to, if the determination sub-module determines that the main input terminal is in the state for accepting input, add the information to be input obtained by the information obtaining module to the input location in the main input terminal.

The storing sub-module 604c is configured to, if the determination sub-module determines that the main input terminal is not in the state for accepting input, store the information to be input obtained by the information obtaining module in the main input terminal.

The second input sub-module 604d is configured to, when the main input terminal enters the state for accepting input later, add the information to be input stored in the storing sub-module to the input location in the main input terminal.

According to an exemplary embodiment, the storing sub-module 604c is configured to, if it is determined that the main input terminal is not in the state for accepting input, store the information to be input obtained by the information obtaining module in a clipboard in the main input terminal.

The second input sub-module 604d is configured to: when the main input terminal enters the state for accepting input later, display notification information to notify that the information to be input is stored in the clipboard; when an operation for pasting the information in the clipboard is received according to the notification information, add the information to be input to the input position in the main input terminal.

According to an exemplary embodiment, the device may further include a logging module 605.

The logging module 605 is configured to, before the information obtaining module obtains the information from the relay device, log into the relay device using a first account, wherein the first account is the same as or associated with a second account, and the second account is an account for the auxiliary input terminal to log into the relay device.

According to an exemplary embodiment, the information obtaining module 603 includes an instruction sending sub-module 603a and an information receiving sub-module 603b.

The instruction sending sub-module 603a is configured to send an input instruction to the auxiliary input terminal via the relay device. The input instruction is configured to instruct the auxiliary input terminal to display an input interface to accept the information input in the input interface, and to send the information to the relay device.

The information receiving sub-module 603b is configured to receive the information to be input returned by the relay device.

In view of the above, in the device for inputting information provided by the embodiment of the present disclosure, a network connection between a main input terminal and a relay device is established; the main input terminal obtains information to be input from the relay device, and the information is input into an auxiliary input terminal and is sent from the auxiliary input terminal to the relay device; the information to be input is added to an input location in the main input terminal. In this way, if the screen size of the main input terminal is relatively small or the input manner is improper for quick entering of information, a user can perform inputting in the auxiliary input terminal which supports convenient and fast input, and the information input into the auxiliary input terminal can be automatically added to the input position in the main input terminal. Thus, input difficulties in the main input terminal are lowered, and thereby efficiency in information input can be raised.

An exemplary embodiment of the present disclosure further provides a device for inputting information, which is capable of implementing the method for inputting information provided by embodiments of the present disclosure. The device can include a processor and a memory for storing instructions executable by the processor; wherein the processor is configured to:
establish a network connection with a relay device;
obtain from the relay device information to be input, wherein the information is input into an auxiliary input terminal and is sent from the auxiliary input terminal to the relay device; and
add the information to be input to an input location in a main input terminal.

According to an exemplary embodiment, adding the information to be input to an input location in the main input terminal, includes:
determining whether the main input terminal is in a state for accepting input; and
if it is determined that the main input terminal is in the state for accepting input, adding the information to be input to the input locationin the main input terminal.

According to an exemplary embodiment, the processor is further configured to:
if it is determined that the main input terminal is not in the state for accepting input, store the information to be input in the main input terminal; and
when the main input terminal enters the state for accepting input later, add the stored information to the input location in the main input terminal.

According to an exemplary embodiment, storing the information to be input in the main input terminal if it is determined that the main input terminal is not in the state for accepting input, includes:
if it is determined that the main input terminal is not in the state for accepting input, storing the information to be input in a clipboard in the main input terminal;
adding the stored information to the input location in the main input terminal when the main input terminal enters the state for accepting input later, includes:
   when the main input terminal enters the state for accepting input later, displaying notification information to notify that the information to be input is stored in the clipboard; and
   on receiving an operation for pasting the information from the clipboard performed according to the notification information, adding the information to be input to the input location in the main input terminal.

According to an exemplary embodiment, the processor is further configured to:
before the information to be input is obtained from the relay device, log into the relay device using a first account, wherein the first account is the same as or associated with a second account, and the second account is an account for the auxiliary input terminal to log into the relay device.

According to an exemplary embodiment, the obtaining the information to be input from the relay device, includes:
sending an input instruction to the auxiliary input terminal via the relay device, wherein the input instruction is configured to instruct the auxiliary input terminal to display an input interface to accept the information input in the input interface, and to send the information to the relay device; and
receiving the information to be input returned by the relay device.

It should be noted that when the device provided by the above embodiments performs the method for inputting information, functions are performed by corresponding modules which are divided as shown in the drawings, and however in practical applications, the functions can be assigned to different modules, that is, the structure of the device can be divided into different functional modules to perform all or a part of the functions.

With respect to the devices in the above embodiments, the specific ways for performing operations for individual modules therein have been described in detail in the embodiments regarding the methods, which will not be elaborated herein.

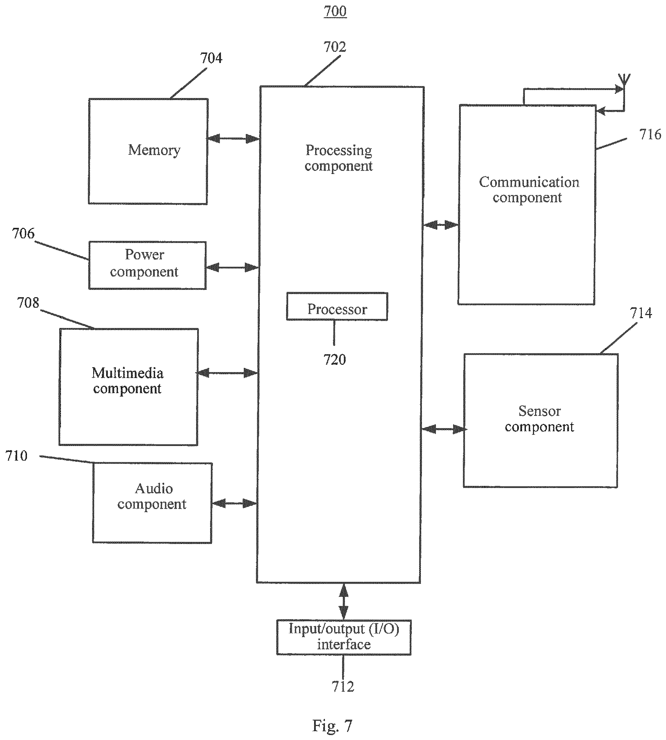

Fig. 7 is a block diagram of a device 700 according to an exemplary embodiment. For example, the device 700 may be an electronic device such as a smart phone, a wearable device, a smart TV or a vehicle-mounted terminal.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G. or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for online payment.

In exemplary embodiments, there is also provided a non-transitory computer-readable storage medium including instructions, such as the memory 704 including instructions executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 700, causes the device 700 to perform above method.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true s.cope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for inputting information into a main mobile terminal device (101) having an input interface, comprising:
establishing by an auxiliary input terminal (102) a network connection with a relay device (103);
establishing (201) by the main mobile terminal device (101) a network connection with the relay device (103);
sending by the main mobile terminal device (101) an input instruction to the auxiliary input terminal via the relay device;
displaying by the auxiliary input terminal (102) an input interface according to the input instruction; and
receiving information input by a user in the input interface;
sending by the auxiliary input terminal (102) the information input in the input interface to the relay device as to-be-input information;
receiving by the main mobile terminal device (101) the to-be-input information returned by the relay device (103); and
adding the to-be-input information to the input interface of the main mobile terminal device (101);
wherein adding (203) the to-be-input information comprises:
determining (305) whether the main mobile terminal device (101) is in a state for accepting input; and
if it is determined that the main mobile terminal device (101) is in the state for accepting input, adding (306) the to-be-input information to the input interface in the main mobile terminal device (101);
**characterized in that**:
if it is determined that the main mobile terminal device (101) is not in the state for accepting input, storing (307) the to-be-input information in memory of the main mobile terminal device (101); and
when the main mobile terminal device (101) enters the state for accepting input later, adding (308) the stored information to the input interface in the main mobile terminal device (101);
wherein storing (307) the to-be-input information to be input in the main mobile terminal device (101) if it is determined that the main mobile terminal device (101) is not in the state for accepting input, comprises:
if it is determined that the main mobile terminal device (101) is not in the state for accepting input, storing (411) the to-be-input information in a clipboard in the main mobile terminal device (101);
wherein adding the stored information to the input interface in the main mobile terminal device (101) when the main mobile terminal device (101) enters the state for accepting input later, comprises:
when the main mobile terminal device (101) enters the state for accepting input later, displaying (412) notification information to notify that the to-be-input information is stored in the clipboard; and
on receiving an operation for pasting the information in the clipboard performed according to the notification information, adding (413) the to-be-input information to the input interface in the main mobile terminal device (101).

2. The method according to claim 1, further comprising:
before the information to be input is obtained from the relay device, logging (402) into the relay device using a first account, wherein the first account is the same as or associated with a second account, and the second account is an account for the auxiliary input terminal to log into the relay device.

3. A main mobile terminal device (101) having an input interface, comprising:
a connection establishing module (501) configured to establish a network connection with a relay device (103);
an instruction sending sub-module (603a) configured to send an input instruction to an auxiliary input terminal via the relay device, wherein the input instruction is configured to instruct the auxiliary input terminal to display an input interface to accept information input in the input interface;
an information obtaining module (502) configured to obtain from the relay device to-be-input information, wherein the to-be-input information is input into the input interface of the auxiliary input terminal and is sent from the auxiliary input terminal to the relay device; and
an input module (503) configured to add the to-be-input information from the information obtaining module obtained from the relay device to the input interface of the main mobile terminal device (101);
wherein the input module (604) comprises:
a determination sub-module (604a) configured to determine whether the main mobile terminal device (101) is in a state for accepting input; and
a first input sub-module (604b) configured to, if the determination sub-module determines that the main mobile terminal is in the state for accepting input, add the to-be-input information obtained by the information obtaining module to the input interface in the main mobile terminal device (101);
**characterized in that**:
the input module (604) further comprises:
a storing sub-module (604c) configured to, if the determination sub-module determines that the main mobile terminal device (101) is not in the state for accepting input, store the information to be input obtained by the information obtaining module in the main mobile terminal device (101); and
a second input sub-module (604d) configured to, when the main mobile terminal device (101) enters the state for accepting input later, add the to-be-input information stored in the storing sub-module to the input interface in the main mobile terminal device (101), wherein the storing sub-module (604c) is further configured to, if it is determined that the main mobile terminal device (101) is not in the state for accepting input, store the to-be-input information obtained by the information obtaining module in a clipboard in the main mobile terminal device (101); and
the second input sub-module (604d) is further configured to: when the main mobile terminal device (101) enters the state for accepting input later, display notification information to notify that the to-be-input information is stored in the clipboard; on receiving an operation for pasting the information in the clipboard performed according to the notification information, add the to-be-input information to the input interface in the main mobile terminal device (101).

4. The main mobile terminal device according to claim 3, further comprising:
a logging module (602) configured to, before the information obtaining module obtains the to-be-input information from the relay device, log into the relay device using a first account, wherein the first account is the same as or associated with a second account, and the second account is an account for the auxiliary input terminal to log into the relay device.

5. A computer program, which when executing on a processor, performs a method according to claim 1.

## Patentansprüche

1. Verfahren zur Eingabe von Informationen in eine mobile Hauptendgerätvorrichtung (101), die eine Eingangsschnittstelle aufweist, umfassend:
Einrichten durch ein Hilfseingangsendgerät (102) einer Netzwerkverbindung mit einer Relaisvorrichtung (103);
Einrichten (201) durch die mobile Hauptendgerätvorrichtung (101) einer Netzwerkverbindung mit der Relaisvorrichtung (103);
Senden durch die mobile Hauptendgerätvorrichtung (101) eines Eingabebefehls an das Hilfseingangsendgerät über die Relaisvorrichtung;
Anzeigen durch das Hilfseingangsendgerät (102) einer Eingangsschnittstelle gemäß dem Eingangsbefehl; und
Empfangen von Informationen, die von einem Anwender eingegeben werden, in der Eingangsschnittstelle;
Senden durch das Hilfseingangsendgerät (102) des Informationseingangs in der Eingangsschnittstelle an die Relaisvorrichtung als einzugebende Informationen;
Empfangen durch die mobile Hauptendgerätvorrichtung (101) der einzugebenden Informationen, die durch die Relaisvorrichtung (103) zurückgeschickt werden; und
Hinzufügen der einzugebenden Informationen zu der Eingangsschnittstelle der mobilen Hauptendgerätvorrichtung (101);
wobei Hinzufügen (203) der einzugebenden Informationen umfasst:
Ermitteln (305), ob die mobile Hauptendgerätvorrichtung (101) in einem Zustand zum Annehmen von Eingang ist; und
falls ermittelt wird, dass die mobile Hauptendgerätvorrichtung (101) in dem Zustand zum Annehmen von Eingang ist, Hinzufügen (306) der einzugebenden Informationen zu der Eingangsschnittstelle in der mobilen Hauptendgerätvorrichtung (101);
**dadurch gekennzeichnet, dass**
falls ermittelt wird, dass die mobile Hauptendgerätvorrichtung (101) nicht in dem Zustand zum Annehmen von Eingang ist, Speichern (307) der einzugebenden Informationen in Speicher der mobilen Hauptendgerätvorrichtung (101); und
wenn die mobile Hauptendgerätvorrichtung (101) später in den Zustand zum Annehmen von Eingang eintritt, Hinzufügen (308) der gespeicherten Informationen zu der Eingangsschnittstelle in der mobilen Hauptendgerätvorrichtung (101);
wobei Speichern (307) der einzugebenden Informationen, die in die mobile Hauptendgerätvorrichtung (101) einzugeben sind, falls ermittelt wird, dass die mobile Hauptendgerätvorrichtung (101) nicht in dem Zustand zum Annehmen von Eingang ist, umfasst:
falls ermittelt wird, dass die mobile Hauptendgerätvorrichtung (101) nicht in dem Zustand zum Annehmen von Eingang ist, Speichern (411) der einzugebenden Informationen in einer Zwischenablage in der mobilen Hauptendgerätvorrichtung (101);
wobei Hinzufügen der gespeicherten Informationen zu der Eingangsschnittstelle in der mobilen Hauptendgerätvorrichtung (101), wenn die mobile Hauptendgerätvorrichtung (101) später in den Zustand zum Annehmen von Eingang eintritt, umfasst:
wenn die mobile Hauptendgerätvorrichtung (101) später in den Zustand zum Annehmen von Eingang eintritt, Anzeigen (412) von Benachrichtigungsinformationen, um zu benachrichtigen, dass die einzugebenden Informationen in der Zwischenablage zu speichern sind; und
beim Empfangen eines Betriebs zum Einfügen der Informationen in der Zwischenablage, der gemäß den Benachrichtigungsinformationen durchgeführt wird, Hinzufügen (413) der einzugebenden Informationen zu der Eingangsschnittstelle in der mobilen Hauptendgerätvorrichtung (101).

2. Verfahren nach Anspruch 1, weiter umfassend:
bevor die Informationen, die einzugeben sind, von der Relaisvorrichtung erhalten werden, Anmelden (402) in der Relaisvorrichtung unter Verwendung eines ersten Kontos, wobei das erste Konto dasselbe wie ein zweites Konto ist oder mit diesem verknüpft ist, und das zweite Konto ein Konto für das Hilfseingangsendgerät ist, um sich in der Relaisvorrichtung anzumelden.

3. Mobile Hauptendgerätvorrichtung (101), die eine Eingangsschnittstelle aufweist, umfassend:
ein Verbindungseinrichtungsmodul (501), das konfiguriert ist, eine Netzwerkverbindung mit einer Relaisvorrichtung (103) einzurichten;
ein Befehlssendungssubmodul (603a), das konfiguriert ist, einen Eingangsbefehl über die Relaisvorrichtung an ein Hilfseingangsendgerät zu senden, wobei der Eingangsbefehl konfiguriert ist, dem Hilfseingangsendgerät zu befehlen, eine Eingangsschnittstelle anzuzeigen, um Informationseingang in der Eingangsschnittstelle anzunehmen;
ein Informationserhaltungsmodul (502), das konfiguriert ist, von der Relaisvorrichtung einzugebende Informationen zu erhalten, wobei die einzugebenden Informationen Eingang in die Eingangsschnittstelle des Hilfseingangsendgeräts sind und von dem Hilfseingangsendgerät an die Relaisvorrichtung gesendet werden; und
ein Eingangsmodul (503), das konfiguriert ist, die einzugebenden Informationen von dem Informationserhaltungsmodul, die von der Relaisvorrichtung erhalten werden, zu der Eingangsschnittstelle der mobilen Hauptendgerätvorrichtung (101) hinzuzufügen;
wobei das Eingangsmodul (604) umfasst:
ein Ermittlungssubmodul (604a), das konfiguriert ist zu ermitteln, ob die mobile Hauptendgerätvorrichtung (101) in einem Zustand zum Annehmen von Eingang ist; und
ein erstes Eingangssubmodul (604b), das konfiguriert ist, falls das Ermittlungssubmodul ermittelt, dass das mobile Hauptendgerät in dem Zustand zum Annehmen von Eingang ist, die einzugebenden Informationen, die von dem Informationserhaltungsmodul erhalten werden, zu der Eingangsschnittstelle in der mobilen Hauptendgerätvorrichtung (101) hinzuzufügen;
**dadurch gekennzeichnet, dass**:
das Eingangsmodul (604) weiter umfasst:
ein Speichersubmodul (604c), das konfiguriert ist, falls das Ermittlungssubmodul ermittelt, dass die mobile Hauptendgerätvorrichtung (101) nicht in dem Zustand zum Annehmen von Eingang ist, die einzugebenden Informationen, die von dem Informationserhaltungsmodul erhalten werden, in der mobilen Hauptendgerätvorrichtung (101) zu speichern; und
ein zweites Eingangssubmodul (604d), das konfiguriert ist, wenn die mobile Hauptendgerätvorrichtung (101) später in den Zustand zum Annehmen von Eingang eintritt, die einzugebenden Informationen, die in dem Speichersubmodul gespeichert sind, zu der Eingangsschnittstelle in der mobilen Hauptendgerätvorrichtung (101) hinzuzufügen, wobei das Speichersubmodul (604c) weiter konfiguriert ist, falls ermittelt wird, dass die mobile Hauptendgerätvorrichtung (101) nicht in dem Zustand zum Annehmen von Eingang ist, die einzugebenden Informationen, die von dem Informationserhaltungsmodul erhalten werden, in einer Zwischenablage in der mobilen Hauptendgerätvorrichtung (101) zu speichern; und
das zweite Eingangssubmodul (604d) weiter konfiguriert ist zum: wenn die mobile Hauptendgerätvorrichtung (101) später in den Zustand zum Annehmen von Eingang eintritt, Anzeigen von Benachrichtigungsinformationen, um zu benachrichtigen, dass die einzugebenden Informationen in der Zwischenablage gespeichert sind; bei Empfangen eines Betriebs zum Einfügen der Informationen in die Zwischenablage, der gemäß den Benachrichtigungsinformationen durchgeführt wird, Hinzufügen der einzugebenden Informationen zu der Eingangsschnittstelle in der mobilen Hauptendgerätvorrichtung (101).

4. Mobile Hauptendgerätvorrichtung nach Anspruch 3, weiter umfassend:
ein Anmeldungsmodul (602), das, bevor das Informationserhaltungsmodul die einzugebenden Informationen von der Relaisvorrichtung erhält, zum Anmelden in der Relaisvorrichtung unter Verwendung eines ersten Kontos konfiguriert ist, wobei das erste Konto dasselbe wie ein zweites Konto ist oder mit diesem verknüpft ist, und das zweite Konto ein Konto für das Hilfseingangsendgerät ist, um sich in der Relaisvorrichtung anzumelden.

5. Computerprogramm, das, wenn es auf einem Prozessor abläuft, ein Verfahren nach Anspruch 1 durchführt.

## Revendications

1. Procédé pour entrer des informations dans un dispositif terminal mobile principal (101) ayant une interface d'entrée, comprenant les étapes consistant à :
établir par l'intermédiaire d'un terminal d'entrée auxiliaire (102) une connexion réseau avec un dispositif de relais (103) ;
établir (201) par l'intermédiaire du dispositif terminal mobile principal (101) une connexion réseau avec le dispositif de relais (103) ;
envoyer par l'intermédiaire du dispositif terminal mobile principal (101) une instruction d'entrée au terminal d'entrée auxiliaire via le dispositif de relais ;
afficher par l'intermédiaire du dispositif d'entrée auxiliaire (102) une interface d'entrée conformément à l'instruction d'entrée ; et
recevoir des informations entrées par un utilisateur dans l'interface d'entrée ;
envoyer par l'intermédiaire du dispositif d'entrée auxiliaire (102) les informations entrées dans l'interface d'entrée au dispositif de relais en tant qu'informations à entrer ;
recevoir par l'intermédiaire du dispositif terminal mobile principal (101) les informations à entrer renvoyées par le dispositif de relais (103) ; et
ajouter les informations à entrer à l'interface d'entrée du dispositif terminal mobile principal (101) ;
dans lequel l'ajout (203) des informations à entrer comprend les étapes consistant à :
déterminer (305) si le dispositif terminal mobile principal (101) est dans un état pour accepter une entrée ; et
s'il est déterminé que le dispositif terminal mobile principal (101) est dans l'état pour accepter une entrée, ajouter (306) les informations à entrer à l'interface d'entrée dans le dispositif terminal mobile principal (101) ;
**caractérisé en ce que** :
s'il est déterminé que le terminal mobile principal (101) n'est pas dans l'état pour accepter une entrée, stocker (307) les informations à entrer dans une mémoire du dispositif terminal mobile principal (101) ; et
lorsque le dispositif terminal mobile principal (101) entre dans l'état pour accepter une entrée ultérieurement, ajouter (308) les informations stockées à l'interface d'entrée dans le dispositif terminal mobile principal (101) ;
dans lequel le stockage (307) des informations à entrer devant être entrées dans le dispositif terminal mobile principal (101) s'il est déterminé que le dispositif terminal mobile principal (101) n'est pas dans l'état pour accepter une entrée, comprend l'étape consistant à :
s'il est déterminé que le dispositif terminal mobile principal (101) n'est pas dans l'état pour accepter une entrée, stocker (411) les informations à entrer dans un presse-papiers dans le dispositif terminal mobile principal (101) ;
dans lequel l'ajout des informations stockées à l'interface d'entrée dans le dispositif terminal mobile principal (101) lorsque le dispositif terminal mobile principal (101) entre dans l'état pour accepter une entrée ultérieurement, comprend les étapes consistant à :
lorsque le dispositif terminal mobile principal (101) entre dans l'état pour accepter une entrée ultérieurement, afficher (412) des informations de notification pour notifier que les informations à entrer sont stockées dans le presse-papiers ; et
lors de la réception d'une opération de collage des informations dans le presse-papiers effectuée conformément aux informations de notification, ajouter (413) les informations à entrer à l'interface d'entrée dans le terminal principal mobile (101).

2. Procédé selon la revendication 1, comprenant en outre :
avant que les informations à entrer ne soient obtenues du dispositif de relais, se connecter (402) au dispositif de relais à l'aide d'un premier compte, dans lequel le premier compte est identique ou associé à un second compte, et le second compte est un compte pour que le terminal d'entrée auxiliaire se connecte au dispositif de relais.

3. Dispositif terminal mobile principal (101) ayant une interface d'entrée, comprenant :
un module d'établissement de connexion (501) configuré pour établir une connexion réseau avec un dispositif de relais (103) ;
un sous-module d'envoi d'instruction (603a) configuré pour envoyer une instruction d'entrée à un terminal d'entrée auxiliaire via le dispositif de relais, dans lequel l'instruction d'entrée est configurée pour demander au terminal d'entrée auxiliaire d'afficher une interface d'entrée pour accepter des informations entrées dans l'interface d'entrée ;
un module d'obtention d'informations (502) configuré pour obtenir du dispositif de relais des informations à entrer, dans lequel les informations à entrer sont entrées dans l'interface d'entrée du terminal d'entrée auxiliaire et sont envoyées du terminal d'entrée auxiliaire au dispositif de relais ; et
un module d'entrée (503) configuré pour ajouter les informations à entrer du module d'obtention d'informations obtenues à partir du dispositif de relais à l'interface d'entrée du dispositif terminal mobile principal (101) ;
dans lequel le module d'entrée (604) comprend :
un sous-module de détermination (604a) configuré pour déterminer si le dispositif terminal mobile principal (101) est dans un état pour accepter une entrée ; et
un premier sous-module d'entrée (604b) configuré pour, si le sous-module de détermination détermine que le terminal mobile principal est dans l'état pour accepter une entrée, ajouter les informations à entrer obtenues par le module d'obtention d'informations à l'interface d'entrée dans le dispositif terminal mobile principal (101) ;
**caractérisé en ce que** :
le module d'entrée (604) comprend en outre :
un sous-module de stockage (604c) configuré pour, si le sous-module de détermination détermine que le dispositif terminal mobile principal (101) n'est pas dans l'état pour accepter une entrée, stocker les informations à entrer obtenues par le module d'obtention d'informations dans le dispositif terminal mobile principal (101) ; et
un second sous-module d'entrée (604d) configuré pour, lorsque le dispositif terminal mobile principal (101) entre dans l'état pour accepter une entrée ultérieurement, ajouter les informations à entrer stockées dans le sous-module de stockage à l'interface d'entrée dans le dispositif terminal mobile principal (101), dans lequel le sous-module de stockage (604c) est en outre configuré pour, s'il est déterminé que le dispositif terminal mobile principal (101) n'est pas dans l'état pour accepter une entrée, stocker les informations à entrer obtenues par le module d'obtention d'informations dans un presse-papiers du dispositif terminal mobile principal (101) ; et
le second sous-module d'entrée (604d) est en outre configuré pour: lorsque le dispositif terminal mobile principal (101) entre dans l'état pour accepter une entrée ultérieurement, afficher des informations de notification pour notifier que les informations à entrer sont stockées dans le presse-papiers ; à la réception d'une opération de collage des informations dans le presse-papiers exécutée conformément aux informations de notification, ajouter les informations à entrer à l'interface d'entrée dans le terminal principal mobile (101).

4. Dispositif terminal mobile principal selon la revendication 3, comprenant en outre :
un module de connexion (602) configuré pour, avant que le module d'obtention d'informations n'obtienne les informations à entrer en provenance du dispositif de relais, se connecter au dispositif de relais à l'aide d'un premier compte, dans lequel le premier compte est identique ou associé à un second compte, et le second compte est un compte permettant au terminal d'entrée auxiliaire de se connecter au dispositif de relais.

5. Programme informatique qui, lors d'une exécution sur un processeur, met en œuvre un procédé selon la revendication 1.
